# EUROPEAN PATENT APPLICATION

(11) **EP 1 820 820 A1**
(43) Date of publication of application: **22.08.2007**
(21) Application number: 06250798.3
(22) Date of filing: 15.02.2006
(51) Int. Cl.: C08L 23/08

(54) **Polyethylene composition**

(71) Applicant: INEOS Manufacturing Belgium NV, 2040 Antwerpen (BE)
(72) Inventor: The designation of the inventor has not yet been filed
(74) Representative: Smith, Julian Philip Howard

(57) **Abstract**

A multimodal ethylene polymer is disclosed, having a density greater than 945 kg/m³ and a melt flow index MI₅ of 0.05 to 50 g/10min, said ethylene polymer comprising-
from 30 to 70wt%, based on the total weight of the ethylene polymer, of a first polyethylene fraction having a density of at least 950 kg/m³ and a melt flow index MI₂ of at least 10 g/10 min, and
from 70 to 30wt%, based on the total weight of the multimodal ethylene polymer, of a second polyethylene fraction comprising units of ethylene, from 0.1 to 10 mol% of a polycycloolefin and optionally up to 5mol% of at least one other alpha-olefin containing from 3 to 12 carbon atoms, and a melt flow index MI₂ of less than 10 g/10min.

## Description

The present invention relates to multimodal ethylene polymers, and in particular to multimodal ethylene polymers which contain polycyclic olefin comonomer.

Multimodal high density polyethylene is well known, and has many applications. Compositions made using such polyethylene are frequently employed in injection moulding, extrusion and extrusion blow-moulding processes. They are well suited to the manufacture of films, the manufacture of caps, and are particularly well suited to the extrusion of pipes, in particular pipes for the transportation of pressurized fluids, such as water and gas.

There is a continuing search for alternative bimodal products having different properties.

The vinylic co-polymerisation of ethylene and norbornene is well-known for vanadium-based catalysts, but little is known regarding the use of heterogeneous Ti-based Ziegler catalysts. Previous publications concerning the use of Ziegler-Natta catalysts in such co-polymerisations often mention that "polymerisation of cyclic olefins by Ziegler catalysts is accompanied by ring-opening" (see for instance: W. Kaminski et al, Makromol. Symp., 2004, 213, 101-108; C. Janiak et al, J. Mol. Cat. A, Chem., 2000, 2981, 1-17 and J. Boor, Ziegler-Natta Catalysis and Polymerizations, AP Press, New York, 1979). Even where vinyl copolymerisation of cyclic olefins using Ti-based Ziegler catalysts is disclosed, the activities remain very low - see for instance, patent DD 246903 (1981) where the productivities are less than 1000 g/g TiCl₄.

EP 1146077/78 of Borealis both disclose bimodal HDPE which contains a nucleating agent. The comonomer in the HDPE is selected from propylene, 1-butene, 1-pentene, 1-hexene, 4-methyl-1-pentene, 1-octene, 1-decene and cyclic olefins. However there is no mention of polycycloolefins.

WO 04/000900 discloses amorphous or semi-crystalline polymers comprising ethylene, higher alpha olefins, and dienes containing at least two polymerisable double bonds, such as norbornene. The polymers are typically made in two reactors, with the first reactor product, containing no more than 1% diene, making up at least 80% of the final product. The examples disclose amorphous polymers containing at least 87% of the first, diene-free block. The polymers are said to have good tear resistance, tear strength, tensile strength and elongation at break.

We have found that the polymerisation of polycycloolefins with ethylene can provide copolymers in which there is virtually no ring-opening, and which have excellent mechanical properties. We have also found that good productivity can be obtained even using heterogeneous Ziegler-Natta catalysts.

In a first aspect the present invention provides a multimodal ethylene polymer having a density greater than 945 kg/m³ and a melt flow index MI₅ of 0.05 to 50 g/10min, said ethylene polymer comprising-
from 30 to 70wt%, based on the total weight of the ethylene polymer, of an ethylene polymer (A) having a density of at least 950 kg/m³ and a melt flow index MI₂ of at least 10 g/10 min, and
from 70 to 30wt%, based on the total weight of the multimodal ethylene polymer, of an ethylene copolymer (B) comprising units of ethylene, from 0.1 to 10 mol% of a polycycloolefin and optionally up to 5mol% of at least one other alpha-olefin containing from 3 to 12 carbon atoms, and a melt flow index MI₂ of less than 10 g/10min.

By "multimodal" is meant a polymer having at least two components of different molecular weights and/or compositions (ie comonomer content), and typically made in at least two reactors in series.

By "polycycloolefin" is meant an olefin containing at least two rings, at least one of which contains a C=C bond.

Preferably the cyclo- or polycyclo-olefin is a compound of the formula (I) 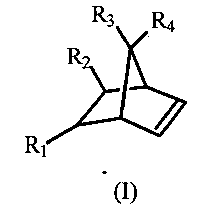 wherein R¹, R², R³ and R⁴ are each independently selected from hydrogen, C₁-C₁₂ alkyl, C₁-C₁₂ alkenyl, C₁-C₁₂ aralkyl or C₁-C₁₂ alkaryl, and R¹ and R² may optionally be joined together to form a cyclic or a polycyclic substituent.

Examples of R¹ and R² are CH₂=CH₂- and CH₃-CH=. Examples of specific compounds are:
Norbornene, also known as bicyclo[2.2.1]hept-2-ene;
5-substituted norbornenes such as phenyl-norbornene resulting from Diels-Alder reaction of styrene and cyclopentadiene;
5,6-disubstituted norbornenes, including when the alky radical is a cycloaliphatic or unsaturated ring (for instance indanyl-norbornene and di-cyclopentadiene);
ethylidene norbornene;
vinylnorbornene;
tetracyclododecene (1,4,5,8-dimethano-1,2,3,4,4a,5,8,8a-octahydronaphthalene, also known as DMON and resulting from the Diels-Alder reaction of norbornene and cyclopentadiene).

In one embodiment of the invention, the polycycloolefin contains no more than one polymerisable C=C double bond.

One form of polymerisation which often occurs with polycycloolefins is ring-opening metathesis polymerisation (ROMP), which forms homopolymers of the cycloolefin rather than copolymers with the ethylene. This homopolymerisation can compete with the desired copolymerisation. However we have found that the compositions of the invention have very little if any polycycloolefin homopolymer. Thus it is a preferred feature that in the compositions of the invention, no more than 2mol% of the polycycloolefin present is in the form of homopolymer.

The multimodal ethylene polymer used in the present invention typically has a density no greater than 965 kg/m³. Within the scope of the present invention, the density is measured according to ISO 1183-3 (1999). The density preferably does not exceed 960 kg/m³, more particularly not 958 kg/m³. The density is preferably at least 948 kg/m3, more preferably at least 951 kg/m³.

For the purposes of the present invention, melt index MI₂ and MI₅ respectively mean the melt indices measured according to ASTM standard D 1238 (1986) at a temperature of 190°C under a load of 2.16 kg (and 8/2 die) and 5 kg respectively. Also, melt index HLMI means the melt index measured according to ASTM standard D 1238 (1986) at a temperature of 190°C under a load of 21.6 kg.

The multimodal ethylene polymer used in the present invention preferably possesses a melt flow index MI₅ of less than 25 g/10 min. MI₅ values of less than 10 g/10 min are particularly preferred, with most preferred values being between 0.1 and 1 g/10 min.

The molecular weight distribution (M_{w}/Mₙ) of the multimodal ethylene polymer of the present invention is preferably between 2 and 50. In one embodiment M_{w}/Mₙ is at least 6: for certain applications, it is preferably at least 10. M_{w}/Mₙ means the ratio between the mean molecular mass by weight M_{w} and the mean molecular mass by number Mₙ of the polymer as they are measured by steric exclusion chromatography (SEC) according to the standards ISO 16014-1 and ISO 16014-4. The SEC is conducted in 1,2,4-trichlorobenzene at 135°C and 1 ml/min on a WATERS^{®} 150C chromatograph equipped with a detector by refractometry. The injections are effected on a set of four WATERS^{®} HT-6E columns in the following conditions: injection of 400µl of a 0.5 g/l solution of polymer and of BHT, linear calibration curve based on Mark-Houwink's coefficients for polystyrenes of K = 1.21 x 10⁻⁴ and a = 0.707 and for polyethylenes K = 3.92 x 10⁻⁴ and a = 0.725.

It is preferred that the multimodal ethylene polymer of the present invention has a dynamic complex viscosity at 0.01 rad/s and 190°C (η_{0.01}) of at least 5 kPa.s. A dynamic complex viscosity at 0.01 rad/s and 190°C (η_{0.01}) of at least 50 kPa.s is more preferred, with most preferred being values higher than 150 kPa.s.

The fraction of ethylene polymer (A) in the multimodal ethylene polymer is preferably at least 40%, more particularly at least 45% by weight compared with the total weight of the multimodal ethylene polymer. The fraction of ethylene polymer (A) preferably does not exceed 60 wt %, more particularly it does not exceed 55 wt % compared with the total weight of the multimodal ethylene polymer.

The fraction of ethylene copolymer (B) in the multimodal ethylene polymer is preferably at least 40%, more particularly at least 45 wt % by weight compared with the total weight of the multimodal ethylene polymer. The fraction of ethylene copolymer (B) preferably does not exceed 60 wt %, more particularly not 55 wt % compared with the total weight of the multimodal ethylene polymer.

The composition used in the present invention generally contains at least 95%, preferably at least 97 % by weight of the whole of the polymer (A) and the copolymer (B). Most particularly preferred is a composition consisting mainly of the polymer (A) and the copolymer (B).

Preferably, the polymer (A) is an ethylene homopolymer. For the purposes of the present invention, there is taken to mean by ethylene homopolymer (A) an ethylene polymer consisting mainly of monomer units of ethylene and substantially devoid of monomer units derived from other olefins.

Copolymer (B) is a copolymer comprising monomer units derived from ethylene and monomer units derived from a cyclo- or polycycloolefin and optionally up to 5mol% of at least one other alpha-olefin containing from 3 to 12 carbon atoms. The other alpha-olefin may be selected from olefinically unsaturated monomers such as butene-1, pentene-1, hexene-1 and octene-1. Butene-1 and hexene-1 are preferred. The content of polycycloolefin in copolymer (B) is preferably from 0.1 to 6 mol%, more preferably from 0.5 to 3 mol%. The content of other alpha-olefin in the copolymer (B) is usually less than 4 mol%, preferably less than 3 mol%. Most preferred are other alpha-olefin contents in copolymer (B) of 0.2 to 2 mol%. Although the invention includes compositions in which copolymer (B) contains as comonomer only the polycycloolefin, copolymer (B) may be a terpolymer, ie it may contain both polycycloolefin and another alpha-olefin containing from 3 to 12 carbon atoms.

For the purposes of the present invention, alpha-olefin content is measured by RMN¹³C according to the method described in J.C.RANDALL, JMS-REV. MACROMOL.CHEM. PHYS., C29(2&3), p.201-317 (1989). For example the content of units derived from hexene is calculated from measurements of the integrals of the characteristic spectral lines of hexene (23.4; 34.9 and 38.1 ppm) with respect to the integral of the characteristic spectral line of the units derived from ethylene (30 ppm).

The content of polycycloolefin in the multimodal ethylene polymer is preferably from 0.1 to 4.0 mol%, more preferably from 0.3 to 1.5 mol%. The content of other alpha-olefin in the multimodal ethylene polymer is usually less than 3 mol%, preferably less than 1.5 mol%. Most preferred are other alpha-olefin contents in the multimodal ethylene polymer of 0.1 to 1.0 mol%.

The density of the polymer (A) is preferably at least 968 kg/m³, more preferably at least 970 kg/m³. Typically, polymer (A) is characterised by a value of MI₂(A) of greater than 30 g/10 min, particularly greater than 50 g/10 min. The value of MI₂(A) is usually less than 800 g/10 min, values of less than 600 g/10 min being particularly preferred. Melt flow indices MI₂(A) of above 80 g/10min, particularly 80 to 200 g/10 min, have given good results.

The density of the copolymer (B) is preferably at least 900 kg/m³, and typically no more than 940 kg/m³, The preferred range of density is 910-940 kg/m³. Preferably, copolymer (B) is characterised by an HLMI of 0.05 to 1.0 g/10 min.

In addition to the multimodal ethylene polymer, the composition used in the present invention may contain conventional additives such as antioxidants, antacids, UV stabilisers, dyes, fillers, antistatic agents and lubricating agents. The total content of additives generally does not exceed 5wt% compared with the total weight of the composition used in the present invention. Preferably it does not exceed 2wt %.

The multimodal ethylene polymer of the present invention may be obtained by any suitable technique, as is well-known in the art. It is possible, for example, to perform the mixing of the polymer (A) and the copolymer (B) by any known process such as, for example, the molten mixing of the two preformed polymers. This technique is often used for experimental purposes, such as in the examples below. Preferred, however, are processes in the course of which the polymer (A) and the copolymer (B) are prepared in at least two successive polymerisation stages. In general, first of all the preparation of the polymer (A) is performed and then the preparation of the copolymer (B) in the presence of the polymer (A) obtained from the first polymerisation stage, although this order may be reversed.

Accordingly, a further aspect of the invention provides a process for preparing a polymer as defined above, comprising the steps of performing a first polymerisation in which polymer (A) or copolymer (B) is prepared, and then performing a second polymerisation in which the other of polymer (A) or copolymer (B) is prepared in the presence of the polymer obtained in the first polymerisation stage.

The polymerisation stages may each be carried out, independently of one another, in suspension in an inert hydrocarbon diluent or in gaseous phase. A process comprising at least two polymerisation stages in suspension in a hydrocarbon diluent is preferred. The hydrocarbon diluent is generally chosen from among aliphatic hydrocarbons containing from 3 to 10 carbon atoms. Preferably, the diluent is chosen from among propane, isobutane, hexane or their mixtures. Such polymerisation processes are well known in the art, and are described for example in EP 897934A.

An alternative process for producing the polymer of the invention involves the use of just one reactor, but using two or more suitable catalyst components to obtain the different polymers. In addition to a slurry process, a solution process, either in multiple reactors or in a single reactor using different catalysts may be used.

A Ziegler-Natta catalyst which can be used to make the compositions of the invention comprises at least one transition metal. Transition metal is understood to denote a metal from Groups 4, 5 or 6 of the Periodic Table of the Elements (CRC Handbook of Chemistry and Physics, 75th edition, 1994-95). The transition metal is preferably titanium and/or zirconium. Titanium is particularly preferred. In the process according to the invention, use is preferably made of a catalyst comprising, in addition to the transition metal, magnesium. Good results have been obtained with catalysts comprising:
from 5 to 30%, preferably from 15 to 20%, by weight of transition metal, from 0.5 to 20%, preferably from 1 to 10%, by weight of magnesium, from 20 to 60%, preferably from 30 to 50%, by weight of halogen, such as chlorine, from 0.1 to 10%, preferably from 0.5 to 5%, by weight of aluminium; the balance generally being composed of elements originating from the products used in their manufacture, such as carbon, hydrogen and oxygen.

These catalysts are preferably obtained by coprecipitation of at least one transition metal compound and of a magnesium compound by means of a halogenated organoaluminium compound. Such catalysts are known; they have been disclosed particularly in patents US 3,901,863, US 4,929,200 and US 4,617,360 (Solvay). In the process according to the invention, the catalyst is preferably introduced solely into the first polymerization reactor, that is to say that fresh catalyst is not introduced into the subsequent polymerization reactor. The amount of catalyst introduced into the first reactor is generally adjusted so as to obtain an amount of at least 0.5 mg of transition metal per litre of diluent. The amount of catalyst usually does not exceed 100 mg of transition metal per litre of diluent.

Alternative preferred catalysts contain 5 to 30% by weight of transition metal, 0.5 to 20% by weight of magnesium, 20 to 60% by weight of chlorine and 0.1 to 10% by weight of aluminium, and have a residual organic radical content in the precipitated catalyst of less than 35wt%. These catalysts are also obtained by coprecipitation of at least one transition metal compound and a magnesium compound by means of a halogenated organoaluminium compound, but with a ratio of transition metal to magnesium of no more than about 1:1. They are described in more detail in our own EP 703247B. Preferred such catalysts have the following composition:
Transition metal from 8 to 16 % by weight
Magnesium content from 5 to 15 % by weight
Chlorine content from 40 to 60 % by weight
Aluminum content less than 5 % by weight
Residual organic content less than 35 % by weight
Total alkyl benzoate content less than 20 % by weight.

The cocatalyst utilised in the process is preferably an organoaluminium composition. Unhalogenated organoaluminium compositions of formula AlR₃ in which R represents an alkyl grouping having from 1 to 8 carbon atoms are preferred. Particularly preferred are triethylaluminium and triisobutylaluminium. The cocatalyst is introduced into the first polymerisation reactor. Fresh cocatalyst may also be introduced into the further reactor. The quantity of cocatalyst introduced into the first reactor is in general at least 0.1x10⁻³ mole per litre of diluent. It does not usually exceed 5x10⁻³ mole per litre of diluent. Any quantity of fresh cocatalyst introduced into the further reactor does not usually exceed 5x10⁻³ mole per litre of diluent.

Alternatively, the compositions of the invention may be made using a metallocene catalyst.

Metallocenes may typically be represented by the general formula:

(C₅Rₙ)_{y} Zₓ (C₅Rₘ) M L_{(4-y-1)}

Where (C₅Rₙ)_{y} and (C₅Rₘ) are cyclopentadienyl ligands,
R is hydrogen, alkyl, aryl, alkenyl, etc.
M is a Group IVA metal
Z is a bridging group,
L is an anionic ligand, and
y is 0, 1 or 2, n and m are from 1 to 5, x is 0 or 1.

The most preferred complexes are those wherein y is 1 and L is halide or alkyl. Typical examples of such complexes are bis (cyclopentadienyl) zirconium dichloride and bis(cyclopentadienyl zirconium dimethyl. In such metallocene complexes the cyclopentadienyl ligands may suitably be substituted by alkyl groups such as methyl, n-butyl or vinyl. Alternatively the R groups may be joined together to form a ring substituent, for example indenyl or fluorenyl. The cyclopentadienyl ligands may be the same or different. Typical examples of such complexes are bis(n-butylcyclopentadienyl) zirconium dichloride or bis (methylcyclopentadienyl) zirconium dichloride.

Examples of such complexes may be found in EP 129368 and EP 206794 the disclosures of which are incorporated herein by reference.

Another type of metallocene complex is constrained geometry complexes in which the metal is in the highest oxidation state. Such complexes are disclosed in EP 416815 and WO 91/04257 both of which are incorporated herein by reference. The complexes have the general formula: 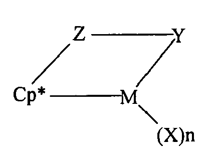 wherein:
Cp* is a single η5-cyclopentadienyl or η5-substituted cyclopentadienyl group optionally covalently bonded to M through -Z-Y- and corresponding to the formula: 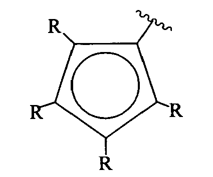 wherein each R is independently hydrogen or a moiety selected from halogen, alkyl, aryl, haloalkyl, alkoxy, aryloxy, silyl groups, and combinations thereof of up to 20 non-hydrogen atoms, or two or more R groups together form a fused ring system;
M is zirconium, titanium or hafnium bound in an η5 bonding mode to the cyclopentadienyl or substituted cyclopentadienyl group and is in a valency state of +3or +4;
each X is independently hydride or a moiety selected from halo, alkyl, aryl, silyl, germyl, aryloxy, alkoxy, amide, siloxy, and combinations thereof (e.g. haloalkyl, haloaryl, halosilyl, alkaryl, aralkyl, silylalkyl, aryloxyaryl, and alkyoxyalkyl, amidoalkyl, amidoaryl) having up to 20 non-hydrogen atoms, and neutral Lewis base ligands having up to 20 non-hydrogen atoms;
n is 1 or 2 depending on the valence of M;
Z is a divalent moiety comprising oxygen, boron, or a member of Group 14 of the Periodic Table of the Elements; and
Y is a linking group covalently bonded to the metal comprising nitrogen, phosphorus, oxygen or sulfur, or optionally Z and Y together form a fused ring system.

Most preferred complexes are those wherein Y is a nitrogen or phosphorus containing group corresponding to the formula (-NR¹) or (-P R¹) wherein R¹ is C₁-C₁₀ alkyl or C₆-C₁₀ aryl and wherein Z is SiR"₂, CR"₂, SiR"₂ SiR"₂, CR"=CR" or GeR"₂ in which R" is hydrogen or hydrocarbyl.

Most preferred complexes are those wherein M is titanium or zirconium.

Further examples of metallocene complexes are those wherein the anionic ligand represented in the above formulae is replaced with a diene moiety. In such complexes the transition metal may be in the +2 or +4 oxidation state and a typical example of this type of complex is ethylene bis indenyl zirconium (II) 1,4-diphenyl butadiene. Examples of such complexes may be found in EP 775148A and WO 95/00526 the disclosures of which are incorporated herein by reference.

For example the complexes may have the general formula: 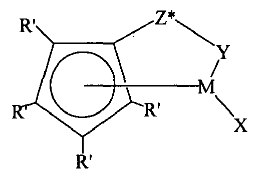 wherein:
R' each occurrence is independently selected from hydrogen, hydrocarbyl, silyl, germyl, halo, cyano, and combinations thereof, said R' having up to 20 non hydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴- bonded diene group having up to 30 non-hydrogen atoms, which forms a π-complex with M;
Y is -O-, -S-, -NR*-, -PR*-;
M is titanium or zirconium in the +2 formal oxidation state;
Z* is SiR₂, CR*₂, SiR*₂SiR*₂, CR*₂CR*₂, CR* = CR*, CR₂SiR*₂, or GeR*₂;
wherein:
R* in each occurrence is independently hydrogen, or a member selected from hydrocarbyl, silyl, halogenated alkyl, halogenated aryl, and combinations thereof, said R* having up to 10 non-hydrogen atoms, and optionally, two R* group from Z* (when R* is not hydrogen), or an R* group from Z* and an R* group from Y form a ring system.

Typically the compositions of the invention are compounded into pellets prior to their use in the manufacture of articles such as pipes, films, caps or other articles. Compounding conditions are well known to those skilled in the art. The compositions may optionally be reticulated at this stage. Reticulation is typically accomplished using either oxygen or peroxide, as is well known in the art. Cross-linking under oxygen is controlled either by injection of oxygen at the powder feeding section, for example at the feeding throat of the extruder or mixer or by nitrogen blanketing flow adjustment at the same feeding throat. In both cases, oxygen concentration is typically controlled at lower than 15 wt%, preferably lower than 11 wt%. Cross-linking under peroxide is controlled by addition of peroxide in powder or liquid form in the pre-mix of additives fed in the extruder, simultaneously with polyethylene powder. The type of peroxide is selected according to its half time life curve versus temperature. It is desired that the peroxide should start to react in the second or the third mixing stage, by which time it is already intimately dispersed in the ethylene polymer. Desirably the peroxide action should stop at the exit of the extruder or mixer, so that its cross-linking action is not longer than the polymer extrusion residence time.

The compositions may also optionally be subjected to a surface modification treatment such as corona treatment, flame treatment or chemical etching. Such treatments are typically used to improve printability of films. Compositions containing unsaturated chains are generally more susceptible to such treatment, enabling less severe conditions to be used.

### EXAMPLES

The Examples which are described below serve to illustrate the invention.

### A. Catalyst preparation

### Catalyst I

The solid catalyst I, comprising ethylene bis (4,5,6,7-tetrahydro-1-indenyl) zirconium dichloride was prepared in accordance with the method of Brintzinger as published in the Journal of Organometallic Chemistry, 288 (1995), pages 63 to 67. The zirconium content in the resulting catalyst is 0.3 % wt.

### Catalyst II

The solid catalyst II was prepared according to the following procedure:
Magnesium diethoxide was reacted with titanium tetrabutoxide for 4 hours at 150°C in an amount such that the molar ratio of titanium to magnesium is equal to 2. The reaction product thus obtained was subsequently chlorinated and precipitated by bringing the latter into contact with an ethylaluminium dichloride solution, with a molar ratio Al:Ti of 3.3, for 90 minutes at 45°C. The catalyst thus obtained, collected from the suspension, comprises (% by weight):
   Ti: 17; Cl: 41; Al: 2; Mg: 5.

### Catalyst III

The solid catalyst III was prepared according to the following procedure:
Magnesium diethoxide was reacted with titanium tetrabutoxide for 4 hours at 150°C in an amount such that the molar ratio of titanium to magnesium is equal to 1. The resulting liquid complex was treated with ethylbenzoate for 4 h at 35°C, and the reaction product thus obtained was subsequently chlorinated and precipitated by bringing the latter into contact with an isobutylaluminium dichloride solution, with a molar ratio Al:Ti of 4.5, for 75 minutes at 45°C. The brownish solid obtained was washed with several fraction of hexane and treated again with an isobutylaluminium dichloride solution, with a molar ratio aluminium:titanium of 2.5, for 45 minutes at 45°C. The catalyst thus obtained, collected from the suspension, comprises (% by weight):
   Ti: 13; Cl: 56; Al: 2; Mg: 8.

### B. Bench scale preparation of the Low Molecular Weight (LMW) Polyethylene Fractions A and B

### Low Molecular Weight Polyethylene Fraction A

Under a stream of dry nitrogen gas, 1.5 millimole of tri-isobutyl-aluminium (TIBAL) and 1500 ml of isobutane were introduced into a dry autoclave reactor having a volume of 5 litres and provided with an agitator. The temperature was raised to 80°C, and after pressure stabilisation hydrogen gas was added. Ethylene gas was then introduced until a partial pressure of ethylene of 10 x 10⁵ Pa was achieved. The amount of hydrogen previously introduced into the autoclave reactor was selected so as to obtain the desired final gas phase molar ratio of hydrogen to ethylene (H₂/C₂ molar ratio of 0.37 %). The polymerisation was then started by flushing the solid catalyst I into the autoclave with 200 ml of isobutane. The temperature, partial pressure of ethylene, and the H₂/C₂ ratio were kept constant over the polymerisation period. The reaction was stopped by cooling and then venting the reactor. The low molecular weight polyethylene A was then collected from the reactor.

### Low Molecular Weight Polyethylene Fraction B

Under a stream of dry nitrogen gas, 2.0 millimoles of tri-ethyl-aluminium (TEAL) and 1500 ml of isobutane were introduced into a dry autoclave reactor having a volume of 5 litres and provided with an agitator. The temperature was raised to 90°C, and after pressure stabilisation hydrogen gas was added until a partial pressure of 13 x 10⁵ Pa was achieved. Ethylene gas was then introduced until a partial pressure of ethylene of 6 x 10⁵ Pa was achieved. The polymerisation was then started by flushing the solid catalyst III into the autoclave with 100 ml of isobutane. The temperature and the partial pressure of ethylene were kept constant over the polymerisation period. The reaction was stopped by cooling and then venting the reactor. The low molecular weight polyethylene B was then collected from the reactor.

### C. Bench scale preparation of the High Molecular Weight (HMW) Polyethylene Fractions

### High Molecular Weight Polyethylene Fraction C-J

The process for preparing the high molecular weight fractions C to J was the same as that for preparing the low molecular weight fraction A specified above, except that instead of adding hydrogen after raising the temperature to 80°C, varying amounts of olefin comonomers (norbornene and/or hexene) were added, and a different amount of ethylene was introduced, in order to obtain the desired ethylene partial pressure and comonomers/ethylene ratio. The high molecular weight ethylene copolymers and terpolymers were collected from the reactor and dried.

The detailed polymerisation conditions are specified in Table 2.

### High Molecular Weight Polyethylene Fractions K-V

Under a stream of dry nitrogen gas, 2.0 millimoles of tri-ethyl-aluminium (TEAL) and 1500 ml of hexane were introduced into a dry autoclave reactor having a volume of 5 litres and provided with an agitator. The temperature was raised to 75°C, and ethylene gas was then introduced until a partial pressure of ethylene of 4 x 10⁵ Pa was achieved. 15 mmol of hydrogen were introduced in the autoclave and the different olefin comonomers (norbornene, hexene, butene) were then added. The polymerisation started after flushing the right amount of catalyst II or catalyst III into the autoclave with 100 ml of isobutane. The temperature and the partial pressure of ethylene were kept constant over the polymerisation period. The reaction was stopped by cooling and then venting the reactor. The high molecular weight ethylene copolymers and terpolymers K-V were collected from the reactor and dried.

The detailed polymerisation conditions are specified in Table 3.

### High Molecular Weight Polyethylene Fractions W-Y

The process for preparing high molecular weight polyethylene fractions W, X and Y was the same as that for preparing compounds K-V, but 1500 mL of isobutane were used in place of hexane, 12 mmol of hydrogen were introduced in the autoclave and the polymerisation temperature was set to 85°C.

The detailed polymerisation conditions are specified in Table 3.

### D. Preparation of polyethylene bimodal resin by flake blending

In order to prepare the bimodal resin, 20 g of the low molecular weight polyethylene fraction obtained in examples A or B above were blended with 20 g of the high molecular weight ethylene co- or ter-polymer obtained in examples C to Y, together with Irganox B215 antioxidant commercially available from CIBA Speciality Chemicals. The resulting blend was pelletised in a DSM Research 15 ML Micro-Compounder. The details of the blending recipes for examples 1 to 23 are specified in Table 6.

The density of the polyethylene is measured according to ISO 1183. HLMI is measured using the procedures of ASTM D-1238 at 190°C using a load of 21.6kg. MI₂ is measured using the procedures of ASTM D-1238 at 190°C using a load of 2.16 kg. MI₅ is measured using the procedures of ASTM D-1238 at 190°C using a load of 5 kg. The different comonomer concentrations in the high molecular weight copolymers were determined by ¹³C NMR spectroscopy on a Bruker DPX300 spectrometer. The temperature and the enthalpy of fusion of the polymers were measured by Differential Scanning Calorimetry.

Rheological measurements were carried out on an oscillatory rheometer (e.g., Rheometrics RDS-2, ARES) with 25mm diameter parallel plates in a dynamic mode under an inert (nitrogen) atmosphere. For all experiments, the rheometer was thermally stable at 190°C for at least 30 minutes before inserting the appropriately stabilised, compression-moulded sample of resin onto the parallel plates. The plates were then closed with a positive normal force registered on the meter to ensure good contact. After about 5 minutes at 190°C, the plates were lightly compressed and the surplus polymer at the circumference of the plates trimmed. A further 10 minutes was allowed for thermal stability and for the normal force to decrease back to zero. Two strain sweep (SS) experiments were initially carried out at 190°C under nitrogen to determine the linear viscoelastic strain that would generate a torque signal which is greater than 10% of the lower scale of the transducer, over the full frequency (e.g. 0.01 to 100 rad/s) range. The first SS experiment was carried out with a low applied frequency of 0.1 rad/s so as to determine the sensitivity of the torque at low frequency. The second SS experiment was carried out with a high applied frequency of 100 rad/s to ensure that the selected applied strain is well within the linear viscoelastic region of the polymer so that the oscillatory rheological measurements do not induce structural changes to the polymer during testing. In addition, a time sweep (TS) experiment was carried out with a low applied frequency of 0.1 rad/s at the selected strain under nitrogen (as determined by the SS experiments) to check the stability of the sample during testing. The frequency sweep (FS) experiment was then carried out at 190°C using the above appropriately selected strain level between dynamic frequencies range of 10⁻² to 100 rad/s under a nitrogen atmosphere. The complex dynamic shear viscosity η*(0.01), at a dynamic frequency of 0.01 rad/s, was determined directly from the viscosity data of the frequency sweep (FS) experiment measured at 190°C.

**TABLE 1 - Characterisation LMW blocks A-B**

| Example | **MI₂ 8/2 (g/10 min)** | **Density (kg/m³)** |
|---|---|---|
| **A** | 550 | 972.4 |
| **B** | 170 | 971.4 |

**TABLE 2 - HMW blocks C-J polymerisation conditions**

| Example | **Catalyst weight (mg)** | **Ethylene partial pressure (bar)** | **Duration (min)** | **1-hexene (g)** | **Norbornene (g)** | **Polymer yield (g)** |
|---|---|---|---|---|---|---|
| **C** | 50 | 16 | 60 | - | 8 | 247 |
| **D** | 150 | 16 | 60 | - | 15.9 | 810 |
| **E** | 150 | 16 | 164 | - | 26.5 | 762 |
| **F** | 150 | 10 | 60 | - | 15.9 | 435 |
| **G** | 250 | 16 | 35 | - | 42.4 | 390 |
| **H** | 150 | 16 | 51 | 13 | 14.6 | 731 |
| **I** | 100 | 16 | 60 | 20 | 7 | 611 |
| **J** | 50 | 16 | 60 | 26.5 | - | 360 |

**TABLE 3 - HMW blocks K-Y polymerisation conditions**

| Example | **Catalyst type** | **Catalyst weight (mg)** | **Duration (min)** | **1-hexene (g)** | **1-butene (g)** | **Norbornene (g)** | **Polymer yield (g)** |
|---|---|---|---|---|---|---|---|
| **K** | III | 22 | 60 | - | - | 26.5 | 593 |
| **L** | III | 30 | 27 | - | - | 60 | 563 |
| **M** | III | 30 | 27 | - | - | 60 | 561 |
| **N** | III | 16 | 45 | 52 | - | 8 | 561 |
| **O** | III | 17 | 57 | - | 8 | 32 | 566 |
| **P** | III | 17 | 50 | - | 18 | 16 | 587 |
| **Q** | III | 18 | 51 | - | 30 | - | 575 |
| **R** | III | 16 | 33 | 80 | - | - | 584 |
| **S** | III | 11 | 90 | 28 | - | 32 | 573 |
| **T** | II | 42 | 50 | - | - | 26.5 | 553 |
| **U** | II | 48 | 196 | - | - | 60 | 562 |
| **V** | III | 15 | 45 | 100 | - | - | 600 |
| **W** | III | 5 | 90 | - | - | 60 | 161 |
| **X** | III | 32 | 57 | - | - | 100 | 599 |
| **Y** | III | 56 | 50 | - | - | 125 | 637 |

**TABLE 4 - HMW blocks C-J characterisation**

| Example | **HLMI (g/10 min)** | **Density (kg/m³)** | **Hexene content in the polymer (g/kg)** | **Norbornene content in the polymer (g/kg)** |
|---|---|---|---|---|
| **C** | 0.10 | 927.5 | 0 | 19 |
| **D** | 0.11 | 928.5 | 0 | 12 |
| **E** | 0.07 | 927.5 | 0 | 21 |
| **F** | 0.16 | 927.7 | 0 | 19 |
| **G** | 0.12 | 926.4 | 0 | 65 |
| **H** | 0.11 | 925.3 | 5 | 17 |
| **I** | 0.12 | 921.7 | 12 | 7 |
| **J** | 0.08 | 914.7 | 16 | 0 |

**TABLE 5 - HMW blocks K-Y characterisation**

| Example | **HLMI (g/10 min)** | **Density (kg/m³)** | **Hexene content in the polymer (g/kg)** | **Butene content in the polymer (g/kg)** | **Norbornene content in the polymer (g/kg)** |
|---|---|---|---|---|---|
| **K** | 0.21 | 936.2 | 0 | 0 | 15 |
| **L** | 0.27 | 933.9 | 0 | 0 | 23 |
| **M** | 0.15 | 932.1 | 0 | 0 | 29 |
| **N** | 0.18 | 928.0 | 18 | 0 | 5 |
| **O** | 0.15 | 930.9 | 0 | 3 | 9 |
| **P** | 0.12 | 927.6 | 0 | 9 | 7 |
| **Q** | 0.13 | 926.7 | 0 | 14 | 0 |
| **R** | 0.09 | 923.4 | 26 | 0 | 0 |
| **S** | 0.13 | 930.1 | 8 | 0 | 15 |
| **T** | 0.12 | 930.4 | 0 | 0 | 28 |
| **U** | 0.28 | 931.8 | 0 | 0 | 90 |
| **V** | 0.20 | 924.1 | 32 | 0 | 0 |
| **W** | 0.20 | 931.9 | 0 | 0 | 55 |
| **X** | 0.96 | 934.9 | 0 | 0 | 66 |
| **Y** | 0.15 5 | 932.8 | 0 | 0 | 101 |

**TABLE 6 - Polymer blends characterisation**

| Example | **LMW block** | **HMW block** | **MI₅ (g/10 min)** | **Density (kg/m³)** | **Tf (°C)** | **Delta Hf (J/g)** | **η_{0.01} kPa.s** |
|---|---|---|---|---|---|---|---|
| **1** | A | C | 0.20 | 949.5 | 132.3 | 194.4 | 464.1 |
| **2** | A | D | 0.22 | 954.0 | 132.6 | 206.7 | 292.8 |
| **3** | A | E | 0.15 | 952.6 | 132.6 | 202.8 | 492.5 |
| **4** | A | F | 0.31 | 952.7 | 132.5 | 200.9 | 290.5 |
| **5** | A | G | 0.25 | 950.6 | 130.0 | 178.8 | 318.1 |
| **6** | A | H | 0.22 | 952.5 | 132.1 | 202.2 | 390.0 |
| **7** | A | I | 0.24 | 950.2 | 131.1 | 199.8 | 409.7 |
| **8** | A | J | 0.17 | 949.3 | 131.1 | 199.3 | 524.6 |
| **9** | B | K | 0.30 | 957.8 | 133.1 | 214.5 | 181.3 |
| **10** | B | L | 0.32 | 956 | 131.4 | 204.3 | 180.3 |
| **11** | B | M | 0.17 | 956.2 | 132.8 | 203.6 | 327.8 |
| **12** | B | N | 0.23 | 953.4 | 131.6 | 206.9 | 247.7 |
| **13** | B | O | 0.20 | 954.6 | 132.3 | 207.7 | 254.7 |
| **14** | B | P | 0.16 | 953.8 | 130.9 | 203.9 | 355.4 |
| **15** | B | Q | 0.16 | 952.3 | 131.9 | 206.9 | 334.6 |
| **16** | B | R | 0.13 | 951.4 | 131.3 | 202.4 | 474.1 |
| **17** | B | S | 0.20 | 954.5 | 131.4 | 206.7 | 273.3 |
| **18** | B | T | 0.17 | 954.8 | 131.5 | 202.8 | 282.0 |
| **19** | B | U | 0.33 | 954.3 | 130.8 | 181.0 | 199.5 |
| **20** | B | V | 0.28 | 950.7 | 133.1 | 198.3 | 234.3 |
| **21** | B | W | 0.35 | 955.1 | 130.8 | 183.0 | 214.2 |
| **22** | B | X | 0.91 | 957.0 | 130.5 | 187.3 | 99.1 |
| **23** | B | Y | 0.14 | 955.0 | 133.5 | 179.6 | 470.0 |

## Claims

1. Multimodal ethylene polymer having a density greater than 945 kg/m³ and a melt flow index MI₅ of 0.05 to 50 g/10min, said ethylene polymer comprising-
from 30 to 70wt%, based on the total weight of the ethylene polymer, of a first polyethylene fraction having a density of at least 950 kg/m³ and a melt flow index MI₂ of at least 10 g/10 min, and
from 70 to 30wt%, based on the total weight of the multimodal ethylene polymer, of a second polyethylene fraction comprising units of ethylene, from 0.1 to 10 mol% of a polycycloolefin and optionally up to 5mol% of at least one other alpha-olefin containing from 3 to 12 carbon atoms, and a melt flow index MI₂ of less than 10 g/10min.

2. Polymer according to claim 1, wherein the polycyclo-olefin is a compound of the formula (I) 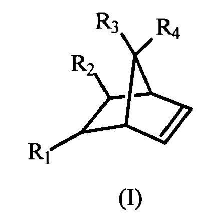 wherein R¹, R² , R³ and R⁴ are each independently selected from hydrogen, C₁-C₁₂ alkyl, C₁-C₁₂ alkenyl, C₁-C₁₂ aralkyl, C₁-C₁₂ aryl or C₁-C₁₂ alkaryl, and R¹ and R² may optionally be joined together to form a cyclic or a polycyclic substituent

3. Polymer according to claim claim 1 or 2, wherein the polycycloolefin is selected from:
norbornene, also known as bicyclo[2.2.1]hept-2-ene;
5-substituted norbornenes;
5,6-disubstituted norbornenes, wherein the alky radical may optionally be a cycloaliphatic or unsaturated ring;
ethylidene norbornene;
vinylnorbornene;
tetracyclododecene, resulting from the Diels-Alder reaction of norbornene and cyclopentadiene.

4. Polymer according to any preceding claim, having a molecular weight distribution (M_{w}/Mₙ) between 2 and 50.

5. Polymer according to any preceding claim, having a melt flow index MI₅ of less than 3 g/10 min, preferably less than 2 g/10 min.

6. Polymer according to any preceding claim, containing a total of from 0.05 to 4 mol% of polycycloolefin.

7. Polymer according to any preceding claim, wherein copolymer (B) contains no other alpha-olefin containing from 3 to 12 carbon atoms.

8. Polymer according to claim 7, which contains no monomer units except those of ethylene and polycycloolefin.

9. Polymer according to any preceding claim, wherein the polycycloolefin contains no more than one polymerisable C=C double bond.

10. Polymer according to any preceding claim, wherein no more than 2mol% of the polycycloolefin present is in the form of homopolymer.

11. Polymer according to any preceding claim, which has a dynamic complex viscosity at 0.01 rad/s and 190°C (η_{0.01}) of at least 150 kPa.s.

12. Process for preparing a polymer as defined in any preceding claim, comprising the steps of performing a first polymerisation in which polymer (A) or copolymer (B) is prepared, and then performing a second polymerisation in which the other of polymer (A) or copolymer (B) is prepared in the presence of the polymer obtained in the first polymerisation stage.

13. Process according to claim 12, wherein after polymerisation, the polymer is compounded and subjected to reticulation conditions.

14. Process according to claim 12 or 13, wherein after polymerisation, the polymer is subjected to a surface modification treatment, preferably corona treatment, flame treatment or chemical etching.
